(19) **Europäisches Patentamt / European Patent Office / Office européen des brevets**

(11) **EP 4 109 590 A1**

(12) **EUROPEAN PATENT APPLICATION**
published in accordance with Art. 153(4) EPC

(43) Date of publication:
**28.12.2022 Bulletin 2022/52**

(21) Application number: **21837076.5**

(22) Date of filing: **06.07.2021**

(51) International Patent Classification (IPC):
*H01M 4/133* (2010.01)　　*H01M 4/587* (2010.01)
*H01M 4/62* (2006.01)　　*H01M 10/0525* (2010.01)
*H01M 4/02* (2006.01)

(52) Cooperative Patent Classification (CPC):
**H01M 4/02; H01M 4/133; H01M 4/587; H01M 4/62; H01M 10/0525;** Y02E 60/10

(86) International application number:
**PCT/KR2021/008561**

(87) International publication number:
**WO 2022/010223 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2020 KR 20200083506**

(71) Applicant: **LG Energy Solution, Ltd.**
**Seoul 07335 (KR)**

(72) Inventors:
• **CHOI, Hee Won**
  **Daejeon 34122 (KR)**
• **LEE, Yong Ju**
  **Daejeon 34122 (KR)**
• **WOO, Sang Wook**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE AND SECONDARY BATTERY COMPRISING ANODE**

(57) The present invention relates to an anode having excellent fast-charging performance and lifespan characteristics, and a secondary battery comprising the anode, and to an anode comprising a current collector and an anode active material layer formed on the current collector, wherein the anode active material layer comprises an anode active material, the anode active material comprises uncoated artificial graphite particles composed of secondary particles formed by the aggregation of a plurality of primary particles, the primary particles have an average diameter ($D_{50}$) of 7-10 $\mu$m, the secondary particles have an average diameter ($D_{50}$) of 15-20 $\mu$m, and the uncoated artificial graphite particles have a crystal size La(100) in the a-axis direction of 200-300 nm and a crystal size Lc(002) in the c-axis direction of 50-100 nm during XRD analysis.

EP 4 109 590 A1

**Description**

**TECHNICAL FIELD**

Cross-Reference to Related Application

This application claims priority to and the benefit of Korean Patent Application No. 10-2020-0083506, filed on July 7, 2020, the disclosure of which is incorporated herein by reference in its entirety.

Technical Field

The present invention relates to a negative electrode whose rapid charging performance and lifetime characteristics are excellent and a secondary battery including the negative electrode, and specifically, to a negative electrode including a negative electrode active material including uncoated artificial graphite particles consisting of secondary particles formed by agglomerating a plurality of primary particles, and a secondary battery including the negative electrode.

**BACKGROUND ART**

With a dramatic increase in the use of fossil fuels, there is an increasing demand for use of alternative energy or clean energy, and power generation and accumulation fields using electrochemical reactions have been most actively studied to meet the increasing demand.

A representative example of the electrochemical device using electrochemical energy comprises secondary batteries, and an application area thereof is gradually expanding. Recently, as technology development and demand for portable devices such as portable computers, mobile phones, cameras, and the like increase, demand for secondary batteries as energy sources is sharply increasing. Also, to improve convenience in use of a secondary battery, a reduction in charging time is required, and accordingly, excellent rapid charging performance is required.

A secondary battery generally consists of a positive electrode, a negative electrode, an electrolyte, and a separator. The negative electrode comprises a negative electrode active material that allows lithium ions released from the positive electrode to be intercalated and deintercalated.

As the negative electrode active material, a graphite-based active material, for example, natural graphite, artificial graphite, or the like, is commonly used. Conventionally used natural graphite is advantageous in that it is inexpensive and has excellent cost-effectiveness, but has a problem such as the occurrence of an irreversible reaction caused by the penetration or decomposition of an electrolyte solution when applied to a battery due to its irregular structure. Also, conventionally used artificial graphite is advantageous in that it exhibits excellent initial charge/discharge efficiency, but has a problem in that it exhibits lower discharge capacity than that of natural graphite.

In order to solve the above problems, a negative electrode active material made by mixing typical natural graphite and artificial graphite, a negative electrode active material in which an amorphous carbon coating layer is formed on typical natural graphite or artificial graphite, and the like have been conventionally used. However, in this case, an electrode is not smoothly roll-pressed, which makes it impossible to reduce the thickness of an electrode and the thickness of a cell, thereby degrading energy density.

Therefore, there is a demand for a negative electrode including a negative electrode material capable of realizing a secondary battery which has high energy density and is excellent in rapid charging performance and lifetime characteristics.

[Related-Art Documents]

[Patent Documents]

Japanese Laid-Open Patent Publication No. 2019-179687

**DETAILED DESCRIPTION OF THE INVENTION**

**TECHNICAL PROBLEM**

The present invention is directed to providing a negative electrode having high energy density, excellent rapid charging performance, and excellent lifetime characteristics and a secondary battery including the negative electrode.

**TECHNICAL SOLUTION**

One aspect of the present invention provides a negative electrode which comprises a current collector and a negative electrode active material layer formed on the current collector, wherein the negative electrode active material layer comprises a negative electrode active material, the negative electrode active material comprises uncoated artificial graphite particles consisting of secondary particles formed by agglomerating a plurality of primary particles, the primary particles have an average particle diameter ($D_{50}$) of 7 $\mu$m to 10 $\mu$m, the secondary particles have an average particle diameter ($D_{50}$) of 15 $\mu$m to 20 $\mu$m, and the uncoated artificial graphite particles have a crystallite size along the a-axis (La(100)) of 200 nm to 300 nm and a crystallite size along the c-axis (Lc(002)) of 50 nm to 100 nm as analyzed by XRD

Another aspect of the present invention provides a secondary battery including the negative electrode.

**ADVANTAGEOUS EFFECTS**

According to the present invention, since a negative electrode comprises a negative electrode active material, which comprises uncoated artificial graphite particles consisting of secondary particles (average particle diameter ($D_{50}$): 15 $\mu$m to 20 $\mu$m) formed by agglomerating a plurality of primary particles (average particle diameter ($D_{50}$): 7 $\mu$m to 10 $\mu$m) and has crystallite sizes along the a-axis and c-axis (La(100) and Lc(002)) adjusted at specific levels as analyzed by XRD, the electrode can be smoothly roll-pressed to achieve a thin electrode and a thin battery, and thus a battery can have high energy density, and the rapid charging performance and lifetime characteristics of a battery can be improved.

**MODES OF THE INVENTION**

Hereinafter, the present invention will be described in more detail to facilitate understanding of the present invention.

Terms and words used in the specification and the claims should not be interpreted as limited to commonly used meanings or meanings in dictionaries and should be interpreted with meanings and concepts which are consistent with the technological scope of the present invention based on the principle that the inventors can appropriately define concepts of terms in order to describe the invention in the best way.

The terminology used in the specification is merely used for the purpose of describing exemplary embodiments, and is not intended to be limiting of the present invention. The singular forms "a", "an", and "the" are intended to include the plural forms as well, unless the context clearly indicates otherwise.

It should be understood that the terms "comprising", "including", and/or "having", when used herein, specify the presence of stated features, integers, steps, operations, elements, components and/or combinations thereof, but do not preclude the presence or addition of one or more other features, integers, steps, operations, elements, components and/or combinations thereof.

In the specification, $D_{50}$ may be defined as a particle diameter corresponding to 50% of the cumulative volume in a particle size distribution curve (curve on the graph of a particle size distribution). The $D_{50}$ may be measured, for example, using a laser diffraction method. The laser diffraction method generally allows the measurement of a particle diameter ranging from a submicron level to several millimeters and may produce a result having high reproducibility and high resolution.

In the specification, a "primary particle" means a single particle, and a "secondary particle" means an agglomerate formed by agglomerating a plurality of the primary particles through a deliberate assembly or bonding process.

**<Negative electrode>**

A negative electrode according to an embodiment of the present invention comprises a current collector and a negative electrode active material layer formed on the current collector, wherein the negative electrode active material layer comprises a negative electrode active material, the negative electrode active material comprises uncoated artificial graphite particles consisting of secondary particles formed by agglomerating a plurality of primary particles, the primary particles have an average particle diameter ($D_{50}$) of 7 $\mu$m to 10 $\mu$m, the secondary particles have an average particle diameter ($D_{50}$) of 15 $\mu$m to 20 $\mu$m, and the uncoated artificial graphite particles have a crystallite size along the a-axis (La(100)) of 200 nm to 300 nm and a crystallite size along the c-axis (Lc(002)) of 50 nm to 100 nm as analyzed by XRD

The negative electrode comprises a current collector and a negative electrode active material layer formed on the current collector.

The current collector serves to support the negative electrode active material layer.

The current collector is not particularly limited as long as it does not cause a chemical change in the battery and has conductivity. For example, copper, stainless steel, aluminum, nickel, titanium, calcined carbon, aluminum or stainless steel whose surface has been treated with carbon, nickel, titanium, silver, or the like, or the like may be used as the current collector. Specifically, a transition metal that easily adsorbs carbon, such as copper or nickel, may be used as the current collector. The current collector may have a thickness of 6 $\mu$m to 20 $\mu$m, but the thickness of the current collector is not limited thereto.

The negative electrode active material layer is formed on the current collector. The negative electrode active material layer may be disposed on at least one surface of the current collector, specifically, on one surface or both surfaces of the current collector.

The negative electrode active material layer comprises a negative electrode active material. The negative electrode active material layer may further include a conductive material, a binder, and the like.

The negative electrode active material may include uncoated artificial graphite particles consisting of secondary particles formed by agglomerating a plurality of primary particles. Specifically, the negative electrode active material may consist of uncoated artificial graphite particles consisting of secondary particles formed by agglomerating a plurality of primary particles. That is, the negative electrode active material may consist only of the uncoated artificial graphite particles. Since the uncoated artificial graphite particles consist of secondary particles formed by agglomerating a plurality of primary particles, roll-pressing may smoothly proceed in the production of a negative electrode to reduce the thickness of a negative electrode and eventually the thickness of a battery, the sufficient discharge capacity of a battery may be ensured in application to a battery, and the charging characteristics of a battery, such as rapid charging, may not be degraded.

In the specification, an uncoated artificial graphite particle means an artificial graphite particle that has been not coated and means that the entire surface of the artificial graphite is exposed

The uncoated artificial graphite particles are less physically damaged even after being roll-pressed as compared to natural graphite and thus may maintain the structure of a negative electrode well. Also, the uncoated artificial graphite particles are smoothly roll-pressed as compared to coated artificial graphite particles, and thus the thickness of a negative electrode and a battery may be reduced, thereby increasing energy density.

The primary particles may have an average particle diameter ($D_{50}$) of 7 $\mu$m to 10 $\mu$m. When the average particle diameter of the primary particles is less than 7 $\mu$m, excessively low capacity may be exhibited due to the excessively small particle diameter, and when the average particle diameter of the primary particles exceeds 10 $\mu$m, charging characteristics such as rapid charging and the like may be degraded due to the excessively large particle diameter. Specifically, the primary particles may have an average particle diameter ($D_{50}$) of 8 $\mu$m to 9 $\mu$m. When the average particle diameter of the primary particles falls within the above-described range, charging characteristics such as rapid charging and the like can be maintained at high levels while sufficiently maintaining exhibited capacity.

The secondary particles may have an average particle diameter ($D_{50}$) of 15 $\mu$m to 20 $\mu$m. When the average particle diameter of the secondary particles is less than 15 $\mu$m, excessively low capacity may be exhibited due to the excessively small particle diameter, and when the average particle diameter of the secondary particles exceeds 20 $\mu$m, charging characteristics such as rapid charging and the like may be degraded due to the excessively large particle diameter. Specifically, the secondary particles may have an average particle diameter ($D_{50}$) of 16 $\mu$m to 19 $\mu$m, and more specifically, 17 $\mu$m to 18 $\mu$m. When the average particle diameter of the secondary particles falls within the above-described range, charging characteristics such as rapid charging and the like can be maintained at high levels while sufficiently maintaining exhibited capacity.

A ratio of the average particle diameter ($D_{50}$) of the primary particles and the average particle diameter ($D_{50}$) of the secondary particles may be 1:1.5 to 1:3, specifically 1:1.5 to 1:2.5, and more specifically 1:1.6 to 1:2.5. When the ratio of the average particle diameter of the primary particles and the average particle diameter of the secondary particles falls within the above-described range, a negative electrode active material can be prepared with high density due to the structural conformation of an active material, which is able to be smoothly roll-pressed, and the rapid charging performance and/or lifetime characteristics of a battery can also be improved.

The negative electrode active material may have a tap density ranging from 1.00 g/cc to 1.20 g/cc, and specifically, 1.05 g/cc to 1.15 g/cc. When the tap density of the negative electrode active material falls within the above-described range, electrode coating with a low thickness can be made due to the sufficiently high tap density.

The tap density is a mass per volume of powder consisting of particles and refers to a density in which voids between particles are filled by constant tapping or vibration. Factors affecting the tap density include particle size distribution, moisture content, particle shape, cohesiveness, and the like. The fluidity and compressibility of a material may be predicted through the tap density. The tap density may be measured based on ASTM D4781 and may be calculated using the equation TD=W/V (TD: tap density, W: sample weight (g), V: sample volume after tapping).

The negative electrode active material may have a BET specific surface area ranging from 0.5 m$^2$/g to 2.5 m$^2$/g, and specifically, 1.5 m$^2$/g to 2.0 m$^2$/g. The BET specific surface area may be measured using a BEL Sorption instrument (BEL Japan Inc.). When the BET specific surface area of the negative electrode active material falls within the above-described range, high-temperature storage and high-temperature cycle performance can be maintained at high levels due to the specific surface area being smaller than that of natural graphite.

The uncoated artificial graphite particles may have a crystallite size along the a-axis (La(100)) of 200 nm to 300 nm and a crystallite size along the c-axis (Lc(002)) of 50 nm to 100 nm as analyzed by X-ray diffraction (XRD). Within the above-described ranges, the degree of crystallinity of the uncoated artificial graphite particles is adjusted to a preferable level, and thus rapid charging performance can be improved, and a negative electrode active material having excellent capacity can be achieved.

When the La(100) is less than 200 nm and the Lc(002) is less than 50 nm, capacity may be excessively degraded due to insufficient crystallinity of artificial graphite particles. When the La(100) exceeds 300 nm and the Lc(002) exceeds 100 nm, rapid charging performance may be degraded due to excess crystallinity of artificial graphite particles.

In the specification, the La(100) means a width along the a-axis of a crystallite calculated based on a diffraction line for the (100) crystal plane in the XRD analysis of the uncoated artificial graphite particles, that is, a crystallite size along the a-axis in the (100) plane, and the Lc(002) means a width along the c-axis of a crystallite calculated based on a diffraction line for the (002) crystal plane in the XRD analysis of the uncoated artificial graphite particles, that is, a crystallite size along the c-axis in the (002) plane.

The uncoated artificial graphite particles may specifically have a crystallite size along the a-axis (La(100)) of 210 nm to 290 nm, and more specifically, 230 nm to 280 nm as analyzed by XRD Also, the uncoated artificial graphite particles may specifically have a crystallite size along the c-axis (Lc(002)) of 60 nm to 90 nm, and more specifically, 65 nm to 85 nm as analyzed by XRD

The La(100) and Lc(002) of the uncoated artificial graphite particle may be achieved, for example, by preparing an intermediate using coke as a primary particle in preparation of uncoated artificial graphite particles in the form of a secondary particle and then graphitizing primary particles and secondary particles through thermal treatment at one time, or appropriately adjusting the graphitization time, but the present invention is not limited thereto.

In the specification, La(100) and Lc(002) may be measured by XRD analysis. Specifically, XRD analysis may use Bruker AXS D4 Endeavor XRD (voltage: 40 kV, current: 40 mA), and measurement may be made under a condition of Cu Ka radiation (wavelength: 1.54 Å) at a scanning speed of 87.5 s/0.02° in a range from 10° to 90° of 2θ. Among measurement results, the full width at half-maximum (FWHM) of a peak in the (002) crystal plane, which appears in the vicinity of 20° to 30° of 2θ, and the FWHM of a peak in the (100) crystal plane, which appears in the vicinity of 38° to 50°, may be measured, and a Lc(002) value and a La(100) value may be obtained by the Scherrer equation.

The negative electrode active material layer may have a pore volume of 12 $cm^3$/g to 17 $cm^3$/g. The negative electrode active material layer may specifically have a pore volume of 13 $cm^3$/g to 16 $cm^3$/g, and more specifically, 14 $cm^3$/g to 15 $cm^3$/g. When the pore volume of the negative electrode active material layer falls within the above-described range, high-temperature battery performance such as high-temperature cycle characteristics, high-temperature storage, and the like can be maintained at high levels.

The negative electrode active material may be included in an amount of 90 wt% to 99 wt%, and specifically, 92 wt% to 97 wt% in the negative electrode active material layer. When the content of the negative electrode active material falls within the above-described range, desired battery capacity can be achieved.

The uncoated artificial graphite particles may be prepared by mixing coke and a binder pitch, thermally treating the mixture at a high temperature to prepare primary particles, mixing the primary particles with a binder pitch, and thermally treating the mixture at a high temperature, specifically, at 2,500 °C to 3,200 °C. Since the binder pitch is graphitized by the thermal treatment at a high temperature, it is possible to prepare uncoated artificial graphite particles in which a coating material such as amorphous carbon and the like is not present. In the case of the thermal treatment, it is preferable that a total thermal treatment time (time considering all of raising a temperature, maintaining a thermal treatment temperature, and lowering a temperature) is 1 week to 3 weeks, and a time required to maintain a thermal treatment temperature is 48 hours to 70 hours so that the graphitization is sufficiently performed. The coke may be needle coke and/or isotropic coke, the coke and the binder pitch may be mixed in a weight ratio of 80:20 to 95:5, and the primary particles and the binder pitch may be mixed in a weight ratio of 80:20 to 95:5.

The conductive material is not particularly limited as long as it does not cause a chemical change in the battery and has conductivity. For example, graphite such as natural graphite, artificial graphite, or the like; carbon black such as acetylene black, Ketjen black, channel black, furnace black, lamp black, thermal black, or the like; a conductive fiber such as carbon fiber, metal fiber, or the like; a conductive tube such as carbon nanotubes or the like; fluorocarbon; metal powder such as aluminum powder, nickel powder, or the like; a conductive whisker such as zinc oxide, potassium titanate, or the like; a conductive metal oxide such as titanium oxide or the like; or a conductive material such as a polyphenylene derivative or the like may be used as the conductive material. The conductive material may include at least one selected from among carbon black and carbon nanotubes and preferably comprises carbon nanotubes.

The conductive material may be included in an amount of 0.1 wt% to 1.0 wt%, and specifically, 0.3 wt% to 0.7 wt% in the negative electrode active material layer. When the content of the conductive material satisfies the above-described range, battery capacity cannot be degraded.

The binder may include at least one selected from the group consisting of a polyvinylidene fluoride-hexafluoropropylene copolymer (PVDF-co-HFP), polyvinylidene fluoride, polyacrylonitrile, polymethyl methacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluoro-rubber, polyacrylic acid, and materials in which hydrogens thereof have been substituted with Li, Na, Ca, or the like, and may also include various copolymers thereof.

The binder may be included in an amount of 30 wt% or less, and specifically, 0.1 wt% to 30 wt% in the negative electrode active material layer. When the content of the binder satisfies the above-described range, an adhesive effect resulting from the use of the binder can be exhibited, and desired capacity per volume of a negative electrode can be maintained.

The negative electrode may have a pore resistance of 8 ohm or less by including the negative electrode active material including the uncoated artificial graphite particles consisting of secondary particles (average particle diameter ($D_{50}$): 15 $\mu$m to 20 $\mu$m) formed by agglomerating a plurality of primary particles (average particle diameter ($D_{50}$): 7 $\mu$m to 10 $\mu$m), wherein the uncoated artificial graphite particles have a crystallite size along the a-axis (La(100)) of 200 nm to 300 nm and a crystallite size along the c-axis (Lc(002)) of 50 nm to 100 nm as analyzed by XRD The negative electrode preferably has a pore resistance of 5 ohm to 8 ohm. When the pore resistance of the negative electrode falls within the above-described range, resistance to electrolyte diffusion is reduced while sufficiently maintaining the structure of an electrode, and thus battery performance such as charging characteristics and the like can be maintained at high levels.

The pore resistance may be defined as a resistance value obtained by injecting a lithium ion-containing electrolyte solution into a symmetric cell produced using the negative electrode for a lithium secondary battery as both a working electrode and a counter electrode and then performing electrochemical impedance spectroscopy (EIS) analysis. Since the pore resistance is measured by the EIS analysis of a symmetric cell, only lithium ions derived from the electrolyte solution may be present, and accordingly, resistance to lithium ion diffusion in a negative electrode may be objectively measured.

**<Secondary battery>**

A secondary battery according to another embodiment of the present invention comprises a negative electrode, and the negative electrode is the same as the above-described negative electrode.

Specifically, the secondary battery may include: the above-described negative electrode; a positive electrode; a separator interposed between the negative electrode and the positive electrode; and an electrolyte, and the negative electrode is the same as the above-described negative electrode. Since the negative electrode has been described above, detailed descriptions thereof will be omitted.

The positive electrode comprises a positive electrode current collector and a positive electrode active material layer formed on the current collector, wherein the positive electrode active material layer comprises a positive electrode active material, and the positive electrode active material may be a layered compound such as a lithium cobalt oxide (LiCoO$_2$), a lithium nickel oxide (LiNiO$_2$), or the like or a compound substituted with one or more transition metals; a lithium iron oxide such as LiFe$_3$O$_4$; a lithium manganese oxide such as Li$_{1+c1}$Mn$_{2-c1}$O$_4$ (0≤c1≤0.33), LiMnO$_3$, LiMn$_2$O$_3$, LiNMO$_2$, or the like; a lithium copper oxide (Li$_2$CuO$_2$); a vanadium oxide such as LiV$_3$O$_8$, V$_2$O$_5$, Cu$_2$V$_2$O$_7$, or the like; a Ni-site-type lithium nickel oxide represented by the chemical formula LiNi$_{1-c2}$M$_{c2}$O$_2$ (here, M is at least one selected from the group consisting of Co, Mn, Al, Cu, Fe, Mg, B, and Ga, and 0.01≤c2≤0.3 is satisfied); a lithium manganese composite oxide represented by the chemical formula LiMn$_{2-c3}$M$_{c3}$O$_2$ (here, M is at least one selected from the group consisting of Co, Ni, Fe, Cr, Zn, and Ta, and 0.01≤c3≤0.1 is satisfied) or Li$_2$Mn$_3$MO$_8$ (here, M is at least one selected from the group consisting of Fe, Co, Ni, Cu, and Zn); or LiMn$_2$O$_4$ in which some Li ions in the chemical formula have been substituted with alkaline earth metal ions.

The positive electrode active material is preferably one or more selected from among a lithium cobalt oxide, a lithium nickel oxide, and Li$_a$Ni$_{x1}$Co$_{y1}$Mn$_{z1}$O$_2$ (0.9≤a≤1.1, 0.6≤x1<1.0, 0<y1<0.4, 0<z1<0.4).

In the positive electrode, the positive electrode current collector is not particularly limited as long as it does not cause a chemical change in the battery and has conductivity. For example, stainless steel, aluminum, nickel, titanium, calcined carbon, or aluminum or stainless steel whose surface has been treated with carbon, nickel, titanium, silver, or the like may be used as the positive electrode current collector. In addition, the positive electrode current collector may typically have a thickness of 3 $\mu$m to 500 $\mu$m and have fine irregularities formed on the surface thereof to increase the adhesion of a positive electrode active material. Additionally, the positive electrode current collector may be used in any of various forms such as a film, a sheet, a foil, a net, a porous material, a foam, a non-woven fabric, and the like.

The positive electrode active material layer may include a positive electrode conductive material and a positive electrode binder in addition to the above-described positive electrode active material.

In this case, the positive electrode conductive material is used to impart conductivity to the electrode, and any conductive material that does not cause a chemical change in the battery and has electron conductivity may be used without particular limitation. Specific examples of the conductive material include: graphite such as natural graphite, artificial graphite, or the like; a carbon-based material such as carbon black, acetylene black, Ketjen black, channel black, furnace black, lamp black, thermal black, carbon fiber, or the like; a metal powder or metal fiber containing copper, nickel, aluminum, silver, or the like; a conductive whisker such as zinc oxide, potassium titanate, or the like; a conductive metal oxide such as titanium oxide or the like; and a conductive polymer such as a polyphenylene derivative or the like, which may be used alone or in combination of two or more thereof.

In addition, the positive electrode binder serves to improve cohesion between positive electrode active material particles and adhesion between the positive electrode active material and the positive electrode current collector. Specific examples of the binder include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber (SBR), fluoro-rubber, and various copolymers thereof, which may be used alone or in combination of two or more thereof.

The separator serves to separate the negative electrode and the positive electrode and provide a passage through which lithium ions migrate, and any separator typically used as a separator in a secondary battery may be used without particular limitation. In particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. Alternatively, a typical porous non-woven fabric, for example, a non-woven fabric made of high-melting-point glass fiber, polyethylene terephthalate fiber, or the like may be used. Alternatively, a coated separator including a ceramic component or a polymer material to ensure heat resistance or mechanical strength may be used, and optionally, the separator may be used in a single-layer or multi-layer structure.

Examples of the electrolyte include an organic liquid electrolyte, an inorganic liquid electrolyte, a solid polymer electrolyte, a gel-type polymer electrolyte, an inorganic solid electrolyte, a molten-type inorganic electrolyte, and the like, which are usable in the production of a lithium secondary battery, but the present invention is not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, $\gamma$-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, or the like may be used.

Among the carbonate-based organic solvents, especially, ethylene carbonate and propylene carbonate, which are cyclic carbonates, are preferably used because they are high-viscosity organic solvents and have high permittivity, thereby satisfactorily dissociating a lithium salt. When a mixture formed by mixing such cyclic carbonates with low-viscosity, low-permittivity linear carbonates such as dimethyl carbonate and diethyl carbonate in an appropriate ratio is used, an electrolyte having high electrical conductivity may be prepared. Therefore, the mixture is more preferably used.

As the metal salt, a lithium salt may be used, and the lithium salt is a substance that is easy to dissolve in the non-aqueous electrolyte solution. For example, as an anion of the lithium salt, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used.

In addition to the above-described electrolyte components, the electrolyte may further include one or more additives selected from among a haloalkylene carbonate-based compound such as difluoroethylene carbonate and the like, pyridine, triethylphosphite, triethanolamine, cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like for the purpose of improving the lifetime characteristics of the battery, suppressing a reduction in battery capacity, improving the discharge capacity of the battery, and the like.

According to still another embodiment of the present invention, a battery module including the above-described secondary battery as a unit cell and a battery pack including the same are provided. Since the battery module and the battery pack include the secondary battery having high capacity, high rate characteristics, and cycle characteristics, they may be used as power sources of medium-to-large-sized devices selected from the group consisting of electric vehicles, hybrid electric vehicles, and plug-in hybrid electric vehicles, and a power storage system.

Hereinafter, exemplary embodiments of the present invention will be described to facilitate understanding of the present invention. However, it is apparent to those skilled in the art that the exemplary embodiments proposed herein are intended to illustrate the present invention, and various changes and modifications can be made within the scope and technical spirit of the present invention, so it goes without saying that the present invention covers all such changes and modifications provided they are within the scope of the appended claims.

**Examples and Comparative Examples**

Example 1: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 8.5 $\mu$m) were prepared. The uncoated artificial graphite particles had a tap density of 1.10 g/cc and a BET specific surface area of 1.8 m$^2$/g.
Specifically, the uncoated artificial graphite particles were prepared by pulverizing a coke raw material into coke with an average particle diameter ($D_{50}$) of 8.5 $\mu$m; mixing the pulverized coke and pitch to prepare an intermediate granulated in the form of a secondary particle; thermally treating the intermediate to induce graphitization and secondary granulation by slowly raising a temperature to 3,000 °C, maintaining the temperature of 3,000 °C for 60 hours, and slowly lowering the temperature to room temperature; and adjusting an average particle diameter ($D_{50}$) of the secondary particles to 17.5 $\mu$m. In this case, the total thermal treatment time of the intermediate was 2 weeks.
The uncoated artificial graphite particles consisting of the secondary particles as a negative electrode active material, styrene butadiene rubber (SBR) as a binder, CNT as a conductive material, and carboxymethyl cellulose (CMC) as a thickener were used.
96.2 parts by weight of the negative electrode active material, 2.3 parts by weight of the binder, 0.5 parts by weight of the conductive material, and 1 part by weight of the thickener were added to and mixed with 15 parts by weight of distilled water to prepare a negative electrode slurry. The negative electrode slurry was applied onto a 15 $\mu$m-thick copper foil (current collector) in a loading amount of 10 mg/cm$^2$ and then dried. In this case, a temperature of circulating air was 130 °C. Subsequently, the current collector on which the negative electrode slurry had been applied was roll-pressed, dried in a vacuum oven set at 130 °C for 1 hour, and punched into a rectangle with a size of 15.2 cm$^2$, thereby producing a negative electrode including a negative electrode active material layer.

Example 2: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 7 $\mu$m) were prepared. The uncoated artificial graphite particles had a tap density of 1.12 g/cc and a BET specific surface area of 1.9 m$^2$/g.
Specifically, the uncoated artificial graphite particles were prepared in the same manner as in Example 1, except that a coke raw material was pulverized into coke with an average particle diameter ($D_{50}$) of 7 $\mu$m.
A negative electrode was produced in the same manner as in Example 1, except that the uncoated artificial graphite particles were used as a negative electrode active material.

Example 3: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 10 $\mu$m) were prepared. The uncoated artificial graphite particles had a tap density of 1.08 g/cc and a BET specific surface area of 1.6 m$^2$/g.
Specifically, the uncoated artificial graphite particles were prepared in the same manner as in Example 1, except that a coke raw material was pulverized into coke with an average particle diameter ($D_{50}$) of 10 $\mu$m.
A negative electrode was produced in the same manner as in Example 1, except that the uncoated artificial graphite particles were used as a negative electrode active material.

Example 4: Preparation of negative electrode

Uncoated artificial graphite particles consisting of secondary particles (average particle diameter ($D_{50}$): 15 $\mu$m) formed by agglomerating a plurality of primary particles (average particle diameter ($D_{50}$): 8.5 $\mu$m) were prepared. The uncoated artificial graphite particles had a tap density of 1.14 g/cc and a BET specific surface area of 1.8 m$^2$/g.
Specifically, the uncoated artificial graphite particles were prepared in the same manner as in Example 1, except that a coke raw material was pulverized into coke with an average particle diameter ($D_{50}$) of 8.5 $\mu$m., and an average particle diameter ($D_{50}$) of secondarily granulated particles was adjusted to 15 $\mu$m.
A negative electrode was produced in the same manner as in Example 1, except that the uncoated artificial graphite particles were used as a negative electrode active material.

Example 5: Preparation of negative electrode

Uncoated artificial graphite particles consisting of secondary particles (average particle diameter ($D_{50}$): 20 $\mu$m)

formed by agglomerating a plurality of primary particles (average particle diameter ($D_{50}$): 8.5 $\mu$m) were prepared. The uncoated artificial graphite particles had a tap density of 1.11 g/cc and a BET specific surface area of 1.8 $m^2$/g.

Specifically, the uncoated artificial graphite particles were prepared in the same manner as in Example 1, except that a coke raw material was pulverized into coke with an average particle diameter ($D_{50}$) of 8.5 $\mu$m., and an average particle diameter ($D_{50}$) of secondarily granulated particles was adjusted to 20 $\mu$m.

A negative electrode was produced in the same manner as in Example 1, except that the uncoated artificial graphite particles were used as a negative electrode active material.

The average particle diameters of primary particles and secondary particles, tap density, and BET specific surface area of the uncoated artificial graphite particles of Examples 1 to 5 are shown in the following Table 1.

[Table 1]

| | Average particle diameter of primary particles ($D_{50}$) | Average particle diameter of secondary particles ($D_{50}$) | Tap density (g/cc) | BET specific surface area ($m^2$/g) |
|---|---|---|---|---|
| Example 1 | 8.5 | 17.5 | 1.10 | 1.8 |
| Example 2 | 7 | 17.5 | 1.12 | 1.9 |
| Example 3 | 10 | 17.5 | 1.08 | 1.6 |
| Example 4 | 8.5 | 15 | 1.14 | 1.8 |
| Example 5 | 8.5 | 20 | 1.11 | 1.8 |

Comparative Example 1: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 6 $\mu$m) were prepared. The uncoated artificial graphite particles had a tap density of 0.90 g/cc and a BET specific surface area of 1.9 $m^2$/g.

Specifically, the uncoated artificial graphite particles were prepared in the same manner as in Example 1, except that a coke raw material was pulverized into coke with an average particle diameter (Dso) of 6 $\mu$m.

A negative electrode was produced in the same manner as in Example 1, except that the uncoated artificial graphite particles were used as a negative electrode active material.

Comparative Example 2: Preparation of negative electrode

Uncoated artificial graphite particles consisting of secondary particles (average particle diameter ($D_{50}$): 13.5 $\mu$m) formed by agglomerating a plurality of primary particles (average particle diameter (Dso): 8.5 $\mu$m) were prepared. The uncoated artificial graphite particles had a tap density of 0.89 g/cc and a BET specific surface area of 1.8 $m^2$/g.

Specifically, the uncoated artificial graphite particles were prepared in the same manner as in Example 1, except that a coke raw material was pulverized into coke with an average particle diameter ($D_{50}$) of 8.5 $\mu$m., and an average particle diameter ($D_{50}$) of secondarily granulated particles was adjusted to 13.5 $\mu$m.

A negative electrode was produced in the same manner as in Example 1, except that the uncoated artificial graphite particles were used as a negative electrode active material.

Comparative Example 3: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 11 $\mu$m) were prepared. The uncoated artificial graphite particles had a tap density of 0.85 g/cc and a BET specific surface area of 1.6 $m^2$/g.

Specifically, the uncoated artificial graphite particles were prepared in the same manner as in Example 1, except that a coke raw material was pulverized into coke with an average particle diameter ($D_{50}$) of 11 $\mu$m.

A negative electrode was produced in the same manner as in Example 1, except that the uncoated artificial graphite particles were used as a negative electrode active material.

Comparative Example 4: Preparation of negative electrode

Uncoated artificial graphite particles consisting of secondary particles (average particle diameter ($D_{50}$): 21 $\mu$m) formed by agglomerating a plurality of primary particles (average particle diameter ($D_{50}$): 8.5 $\mu$m) were prepared. The uncoated artificial graphite particles had a tap density of 0.82 g/cc and a BET specific surface area of 1.8 $m^2$/g.

Specifically, the uncoated artificial graphite particles were prepared in the same manner as in Example 1, except that a coke raw material was pulverized into coke with an average particle diameter ($D_{50}$) of 8.5 $\mu$m., and an average particle diameter ($D_{50}$) of secondarily granulated particles was adjusted to 21 $\mu$m.

A negative electrode was produced in the same manner as in Example 1, except that the uncoated artificial graphite particles were used as a negative electrode active material.

Comparative Example 5: Preparation of negative electrode

92 parts by weight of the uncoated artificial graphite particles of Example 1 and 8 parts by weight of pitch as a coating material were mixed, and the mixture was thermally treated at 1,200 °C for 10 hours to prepare soft carbon-coated artificial graphite particles. The coated artificial graphite particles had a tap density of 0.91 g/cc and a BET specific surface area of 0.8 $m^2$/g.

A negative electrode was produced in the same manner as in Example 1, except that the soft carbon-coated artificial graphite particles were used as a negative electrode active material.

Comparative Example 6: Preparation of negative electrode

92 parts by weight of the uncoated artificial graphite particles of Comparative Example 1 and 8 parts by weight of pitch as a coating material were mixed, and the mixture was thermally treated at 1,200 °C for 10 hours to prepare soft carbon-coated artificial graphite particles. The coated artificial graphite particles had a tap density of 0.90 g/cc and a BET specific surface area of 0.9 $m^2$/g.

A negative electrode was produced in the same manner as in Example 1, except that the soft carbon-coated artificial graphite particles were used as a negative electrode active material.

Comparative Example 7: Preparation of negative electrode

A negative electrode was produced in the same manner as in Example 1, except that natural graphite (POSCO CHEMICAL, PAS-C3B) was used as a negative electrode active material.

The secondary particles included in the natural graphite had an average particle diameter ($D_{50}$) of 17.5 $\mu$m, and the natural graphite had a tap density of 1.05 g/cc and a BET specific surface area of 2.4 $m^2$/g.

Comparative Example 8: Preparation of negative electrode

A negative electrode was produced in the same manner as in Example 1, except that natural graphite (BTR, AGP8F) was used as a negative electrode active material.

The secondary particles included in the natural graphite had an average particle diameter ($D_{50}$) of 9.5 $\mu$m, and the natural graphite had a tap density of 1.10 g/cc and a BET specific surface area of 2.9 $m^2$/g.

Comparative Example 9: Preparation of negative electrode

Uncoated artificial graphite particles consisting of secondary particles (average particle diameter ($D_{50}$): 17.5 $\mu$m) formed by agglomerating a plurality of primary particles (average particle diameter ($D_{50}$): 8.5 $\mu$m) were prepared. The uncoated artificial graphite particles had a tap density of 0.90 g/cc and a BET specific surface area of 3.1 $m^2$/g.

Specifically, the uncoated artificial graphite particles were prepared in the same manner as in Example 1, except that an intermediate was thermally treated to induce graphitization and secondary granulation by raising a temperature to 3,000 °C, maintaining the temperature of 3,000 °C for 12 hours, and slowly lowering the temperature to room temperature, and the total thermal treatment time of the intermediate was 72 hours.

A negative electrode was produced in the same manner as in Example 1, except that the uncoated artificial graphite particles were used as a negative electrode active material.

Comparative Example 10: Preparation of negative electrode

Uncoated artificial graphite particles consisting of secondary particles (average particle diameter ($D_{50}$): 17.5

μm) formed by agglomerating a plurality of primary particles (average particle diameter ($D_{50}$): 8.5 μm) were prepared. The uncoated artificial graphite particles had a tap density of 1.12 g/cc and a BET specific surface area of 1.3 $m^2$/g.

Specifically, the uncoated artificial graphite particles were prepared by mixing artificial graphite in the form of primary particles with an average particle diameter ($D_{50}$) of 8.5 μm with pitch to prepare a mixture; thermally treating the mixture to induce graphitization and secondary granulation by slowly raising a temperature to 3,000 °C, maintaining the temperature of 3,000 °C for 100 hours, and slowly lowering the temperature to room temperature; and adjusting an average particle diameter ($D_{50}$) of the secondary particles to 17.5 μm. In this case, the total thermal treatment time of the mixture was 2 weeks and 2 days. The uncoated artificial graphite particles were different from those of Example 1 in that artificial graphite itself was used as a primary particle unlike that of Example 1 in which the mixture of coke and pitch was prepared as an intermediate, thermally treated, graphitized, and secondarily granulated.

A negative electrode was produced in the same manner as in Example 1, except that the uncoated artificial graphite particles were used as a negative electrode active material.

The average particle diameters of primary particles and secondary particles, tap density, and BET specific surface area of Comparative Examples 1 to 10 are shown in the following Table 2.

[Table 2]

| | Average particle diameter of primary particles ($D_{50}$) | Average particle diameter of secondary particles ($D_{50}$) | Tap density (g/cc) | BET specific surface area ($m^2$/g) |
|---|---|---|---|---|
| Comparative Example 1 | 6 | 17.5 | 0.90 | 1.9 |
| Comparative Example 2 | 8.5 | 13.5 | 0.89 | 1.8 |
| Comparative Example 3 | 11 | 17.5 | 0.85 | 1.6 |
| Comparative Example 4 | 8.5 | 21 | 0.82 | 1.8 |
| Comparative Example 5 | 8.5 | 17.5 | 0.91 | 0.8 |
| Comparative Example 6 | 6 | 17.5 | 0.90 | 0.9 |
| Comparative Example 7 | - | 17.5 | 1.05 | 2.4 |
| Comparative Example 8 | - | 9.5 | 1.10 | 2.9 |
| Comparative Example 9 | 8.5 | 17.5 | 0.90 | 3.1 |
| Comparative Example 10 | 8.5 | 17.5 | 1.12 | 1.3 |

The tap density of each of the artificial graphite and natural graphite in Examples and Comparative Examples was a value measured using a Seishin enterprise tap denser after inputting 40 g of each of artificial graphite and natural graphite into a plastic cylinder and tapping 1000 times.

※ Measurement of La(100) and Lc(002) of negative electrode active materials of Example 1, Comparative Example 9, and Comparative Example 10

The negative electrode active materials of Example 1, Comparative Example 9, and Comparative Example 10 were analyzed by X-ray diffraction (XRD) to measure a crystallite size along the a-axis (La(100)) and a crystallite size along the c-axis (Lc(002).

Specifically, XRD analysis used Bruker AXS D4 Endeavor XRD (voltage: 40 kV, current: 40 mA), and measurement was made under a condition of Cu Kα radiation (wavelength: 1.54 Å) at a scanning speed of 87.5 s/0.02° in a range from 10° to 90° of 2θ. Among measurement results, the full width at half-maximum (FWHM) of a peak in the (002) crystal plane, which appears in the vicinity of 20° to 30° of 2θ and the FWHM of a peak in the (100) crystal plane, which appears in the vicinity of 38° to 50° were measured, and a Lc(002) value and a La(100) value were obtained by the Scherrer equation.

Results thereof are shown in the following Table 3.

[Table 3]

|  | La(100) (nm) | Lc(002) (nm) |
|---|---|---|
| Example 1 | 270 | 80 |
| Comparative Example 9 | 190 | 45 |
| Comparative Example 10 | 310 | 105 |

## Experimental Examples

Experimental Example 1: Evaluation of energy density of battery

<Preparation of full-cell lithium secondary battery>

Batteries were produced using the negative electrodes of Examples 1 to 5 and Comparative Examples 1 to 10 as follows.

LCO as a positive electrode active material, a carbon black-based conductive material, and PVDF powder as a binder were mixed in a weight ratio of 92:2:6 in a N-methyl-2 pyrrolidone solvent to prepare a positive electrode slurry.

The prepared positive electrode slurry was applied onto a 20 $\mu$m-thick positive electrode current collector so that a loading amount (mg/cm$^2$) was 23.4 mg per unit area, dried in a vacuum oven set at 130 °C for 1 hour, and roll-pressed at a pressure of 15 MPa while passing through rollers heated at 80 °C, thereby producing a positive electrode with a final thickness (current collector+active material layer) of 72.5 $\mu$m.

A porous polyethylene separator was interposed between each of the negative electrodes produced in Examples 1 to 5 and Comparative Examples 1 to 8 and the positive electrode, a battery was assembled in a stacking manner, and an electrolyte solution (ethylene carbonate (EC)/ethyl methyl carbonate (EMC)=1:4 (volume ratio), lithium hexafluoro-phosphate (LiPF$_6$ 1 mole), and vinylidene carbonate (VC) in an amount of 0.5 wt% based on the weight of the electrolyte solution) was injected into the assembled battery, thereby producing individual full-cell lithium secondary batteries.

<Evaluation of energy density>

The produced full-cell lithium secondary battery was used to measure energy density per volume of each of the negative electrodes of Examples 1 to 5 and Comparative Examples 1 to 10 using a PNE charger/discharger (PNE Solution). Results thereof are shown in Table 4 below.

Experimental Example 2: Evaluation of lifetime characteristics of battery

The full-cell lithium secondary battery produced in Experimental Example 1 was charged and discharged by setting a charging range from SOC 0% to SOC 100% and performing the 1st cycle at a current rate of 0.1 C, the 2nd cycle at a current rate of 0.2 C, and the 3rd to 100th cycles at 0.5 C, and then the charging performance of the battery was calculated by the following Equation 1. Results thereof are shown in Table 4 below.

[Equation 1]

$$\text{Charging performance (\%)} = [\text{Charge capacity after } 100^{th} \text{ cycle/Initial charge capacity}] \times 100$$

Experimental Example 3: Evaluation of pore resistance of negative electrode

Each of the negative electrodes of Examples 1 to 5 and Comparative Examples 1 to 10 was used as both a working electrode and a counter electrode, and a polyethylene separator was interposed between the working electrode and the counter electrode to prepare an electrode assembly. An electrolyte solution, which was prepared by dissolving 1 M $LiPF_6$ in a solvent obtained by mixing ethylene carbonate (EC) and diethylene carbonate (EMC) in a volume ratio of 1:4, was injected into the electrode assembly to produce a symmetric cell.

The impedance of the symmetric cell was measured in a frequency range of $10^6$ Hz to 0.05 Hz using an electrochemical impedance analyzer, electrolyte resistance and pore resistance were separated, and pore resistance was measured. Results thereof are shown in Table 4 below.

Experimental Example 4: Evaluation of rapid charging performance

<Preparation of coin-type half-cell>

Each of the negative electrodes of Examples 1 to 5, Comparative Examples 1 to 10 was punched into a coin-cell size, a polyolefin separator was interposed between the negative electrode and a lithium metal counter electrode, and an electrolyte, which was prepared by dissolving 1 M $LiPF_6$ in a solvent obtained by mixing ethylene carbonate (EC) and ethyl methyl carbonate (EMC) in a volume ratio of 20:80 and adding a vinylene carbonate (VC) additive in an amount of 0.5 wt%, was injected thereinto, thereby producing coin-type half-cells of Examples and Comparative Examples.

<Evaluation of metal charging performance>

The produced coin-type half-cells of Examples 1 to 5 and Comparative Examples 1 to 10 were used to evaluate Li-plating SOC (%).

Specifically, each of the coin-type half-cells of Examples and Comparative Examples was subjected to three cycles of charging and discharging at 0.1 C and charged at 3 C for 15 minutes, and an inflection point when the resultant profile was primarily differentiated (dQ/dV) was identified, and Li-plating SOC (%), which is the SOC at the time point where lithium began to precipitate on a surface of the negative electrode, was quantified. Results thereof are shown in the following Table 4.

[Table 4]

|  | Energy density (Wh/L) | Charging performance (%) | Pore resistance (ohm) | Li-plating SOC (%) |
|---|---|---|---|---|
| Example 1 | 780 | 94 | 6 | 26 |
| Example 2 | 770 | 92 | 7 | 24 |
| Example 3 | 760 | 91 | 8 | 23 |
| Example 4 | 750 | 90 | 7 | 21 |
| Example 5 | 740 | 88 | 8 | 18 |
| Comparative Example 1 | 700 | 76 | 10 | 17 |
| Comparative Example 2 | 680 | 73 | 11 | 16 |
| Comparative Example 3 | 670 | 72 | 14 | 16 |
| Comparative Example 4 | 660 | 70 | 15 | 15 |
| Comparative Example 5 | 650 | 69 | 14 | 14 |
| Comparative Example 6 | 620 | 66 | 16 | 12 |
| Comparative Example 7 | 670 | 65 | 19 | 12 |
| Comparative Example 8 | 640 | 63 | 21 | 10 |
| Comparative Example 9 | 550 | 94 | 6 | 26 |
| Comparative Example 10 | 770 | 65 | 18 | 10 |

Referring to Table 4, it can be confirmed that the negative electrodes of Examples 1 to 5 according to the present invention exhibited high energy density compared to the negative electrodes of Comparative Examples 1 to 8.

This is because the negative electrodes of Examples 1 to 5 were smoothly roll-pressed by including uncoated artificial graphite particles consisting of secondary particles with an average particle diameter ($D_{50}$) of 15 $\mu$m to 20 $\mu$m, which were formed by agglomerating primary particles with an average particle diameter ($D_{50}$) of 7 $\mu$m to 10 $\mu$m.

In addition, it can be confirmed that the batteries including the negative electrodes of Examples 1 to 5 according to the present invention exhibited remarkably excellent charging performance compared to the batteries including the negative electrodes of Comparative Examples.

Additionally, it can be confirmed that the negative electrodes according to the present invention exhibited a low pore resistance of 8 ohm or less and excellent rapid charging performance. Accordingly, it can be seen that the negative electrodes according to the present invention are capable of maintaining charging characteristics at high levels by lowering resistance to electrolyte diffusion while sufficiently maintaining the structure of the electrode.

**Claims**

1.  A negative electrode, comprising:

    a current collector; and
    a negative electrode active material layer formed on the current collector,
    wherein the negative electrode active material layer comprises a negative electrode active material,
    wherein the negative electrode active material comprises uncoated artificial graphite particles consisting of secondary particles formed by agglomerating a plurality of primary particles,
    wherein the primary particles have an average particle diameter ($D_{50}$) of 7 $\mu$m to 10 $\mu$m,
    wherein the secondary particles have an average particle diameter ($D_{50}$) of 15 $\mu$m to 20 $\mu$m, and
    wherein the uncoated artificial graphite particles have a crystallite size along an a-axis (La(100)) of 200 nm to 300 nm and a crystallite size along a c-axis (Lc(002)) of 50 nm to 100 nm as analyzed by XRD

2.  The negative electrode of claim 1, wherein the negative electrode active material consists of the uncoated artificial graphite particles.

3.  The negative electrode of claim 1, wherein the negative electrode active material has a tap density ranging from 1.00 g/cc to 1.20 g/cc.

4.   The negative electrode of claim 1, wherein the negative electrode active material has a BET specific surface area ranging from 0.5 m$^2$/g to 2.5 m$^2$/g.

5.  The negative electrode of claim 1, wherein the negative electrode active material layer has a pore volume ranging from 12 cm$^3$/g to 17 cm$^3$/g.

6.  The negative electrode of claim 1, wherein the negative electrode active material is included in an amount of 90 wt% to 99 wt% in the negative electrode active material layer.

7.  The negative electrode of claim 1, wherein the negative electrode active material layer further comprises a conductive material, and
    wherein the conductive material is included in an amount of 0.1 wt% to 1.0 wt% in the negative electrode active material layer.

8.  The negative electrode of claim 7, wherein the conductive material comprises at least one selected from the group consisting of carbon black and carbon nanotubes.

9.  The negative electrode of claim 1, wherein the negative electrode has a pore resistance of 8 ohm or less.

10. A secondary battery, comprising:

    the negative electrode according to any one of claim 1 to claim 9;
    a positive electrode;
    a separator interposed between the negative electrode and the positive electrode; and
    an electrolyte.

<table>
<tr><td colspan="2" align="center">INTERNATIONAL SEARCH REPORT</td><td colspan="2">International application No.<br><br>**PCT/KR2021/008561**</td></tr>
</table>

**A.      CLASSIFICATION OF SUBJECT MATTER**

**H01M 4/133**(2010.01)i; **H01M 4/587**(2010.01)i; **H01M 4/62**(2006.01)i; **H01M 10/0525**(2010.01)i; **H01M 4/02**(2006.01)i

According to International Patent Classification (IPC) or to both national classification and IPC

**B.      FIELDS SEARCHED**

Minimum documentation searched (classification system followed by classification symbols)

H01M 4/133(2010.01); C01B 32/05(2017.01); C01B 32/205(2017.01); C01B 32/21(2017.01); H01M 10/052(2010.01); H01M 10/0525(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인조흑연(artificial graphite), 평균입경(average particle diameter), 1차 입자(single particle), 2차 입자(secondary particle), 미피복(uncoated), 음극(anode), 이차전지(secondary battery)

**C.      DOCUMENTS CONSIDERED TO BE RELEVANT**

| Category* | Citation of document, with indication, where appropriate, of the relevant passages | Relevant to claim No. |
|---|---|---|
| X | KR 10-2019-0062319 A (LG CHEM, LTD.) 05 June 2019 (2019-06-05)<br>   See claims 1, 2, 7, 9, 14 and 16; paragraphs [0027], [0070], [0071], [0074], [0082], [0105], [0106] and [0169]; and table 2. | 1-10 |
| A | KR 10-2017-0048210 A (LG CHEM, LTD.) 08 May 2017 (2017-05-08)<br>   See entire document. | 1-10 |
| A | KR 10-2017-0136878 A (SK INNOVATION CO., LTD.) 12 December 2017 (2017-12-12)<br>   See entire document. | 1-10 |
| A | KR 10-2020-0076504 A (POSCO et al.) 29 June 2020 (2020-06-29)<br>   See entire document. | 1-10 |
| A | KR 10-2019-0143621 A (POSCO et al.) 31 December 2019 (2019-12-31)<br>   See entire document. | 1-10 |

☐ Further documents are listed in the continuation of Box C.            ☑ See patent family annex.

| | |
|---|---|
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 October 2021** | **22 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/008561**

| Patent document cited in search report | | | Publication date (day/month/year) | Patent family member(s) | | | Publication date (day/month/year) |
|---|---|---|---|---|---|---|---|
| KR | 10-2019-0062319 | A | 05 June 2019 | CN | 110870115 | A | 06 March 2020 |
| | | | | EP | 3641034 | A1 | 22 April 2020 |
| | | | | KR | 10-2165885 | B1 | 14 October 2020 |
| | | | | US | 2020-0295351 | A1 | 17 September 2020 |
| | | | | WO | 2019-107936 | A1 | 06 June 2019 |
| KR | 10-2017-0048210 | A | 08 May 2017 | KR | 10-2171094 | B1 | 28 October 2020 |
| KR | 10-2017-0136878 | A | 12 December 2017 | CN | 107464933 | A | 12 December 2017 |
| | | | | DE | 102017111961 | A1 | 07 December 2017 |
| | | | | US | 10454095 | B2 | 22 October 2019 |
| | | | | US | 2017-0352871 | A1 | 07 December 2017 |
| KR | 10-2020-0076504 | A | 29 June 2020 | KR | 10-2020-0076498 | A | 29 June 2020 |
| | | | | KR | 10-2176343 | B1 | 09 November 2020 |
| | | | | KR | 10-2240777 | B1 | 14 April 2021 |
| | | | | WO | 2020-130443 | A1 | 25 June 2020 |
| KR | 10-2019-0143621 | A | 31 December 2019 | KR | 10-2218329 | B1 | 22 February 2021 |

Form PCT/ISA/210 (patent family annex) (July 2019)

**EP 4 109 590 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200083506
- JP 2019179687 A